**Europäisches Patentamt**

**European Patent Office**

**Office européen des brevets**

(19)

(11) Veröffentlichungsnummer: **0 428 649 B1**

(12) # EUROPÄISCHE PATENTSCHRIFT

(45) Veröffentlichungstag der Patentschrift: **07.09.94**

(21) Anmeldenummer: **90906884.3**

(22) Anmeldetag: **14.05.90**

(86) Internationale Anmeldenummer:
**PCT/DE90/00347**

(87) Internationale Veröffentlichungsnummer:
**WO 90/14970 (13.12.90 90/28)**

(51) Int. Cl.⁵: **B60G  17/08**, B60G 17/01,
F16F 15/02

Die Akte enthält technische Angaben, die nach
dem Eingang der Anmeldung eingereicht wurden
und die nicht in dieser Patentschrift enthalten sind.

(54) **VERFAHREN UND VORRICHTUNG ZUR DÄMPFUNG VON BEWEGUNGSABLÄUFEN.**

(30) Priorität: **08.06.89 DE 3918735**

(43) Veröffentlichungstag der Anmeldung:
**29.05.91 Patentblatt  91/22**

(45) Bekanntmachung des Hinweises auf die
Patenterteilung:
**07.09.94 Patentblatt  94/36**

(84) Benannte Vertragsstaaten:
**DE FR GB**

(56) Entgegenhaltungen:
**EP-A- 197 316**     **EP-A- 246 772**
**WO-A-88/06983**     **DE-A- 3 640 152**
**DE-A- 3 738 048**     **DE-A- 3 817 041**
**DE-C- 3 518 503**     **GB-A- 1 485 003**

(73) Patentinhaber: **ROBERT BOSCH GMBH**
**Postfach 30 02 20**
**D-70442 Stuttgart (DE)**

(72) Erfinder: **NEUMANN, Udo**
**Albert-Schweitzer-Strasse 47**
**D-7250 Leonberg 6 (DE)**
Erfinder: **KALLENBACH, Rainer**
**Grimmstrasse 8**
**D-7000 Stuttgart 1 (DE)**

## Beschreibung

Stand der Technik

Die Erfindung betrifft ein Verfahren zur Dämpfung von Bewegungsabläufen, insbesondere an Fahrwerken von Personen- und Nutzkraftwagen, nach der Gattung des Hauptanspruchs.

In der Fahrzeugtechnik wird das Ziel eines möglichst hohen Fahrkomforts bei einer auch in Grenzbereichen des Fahrzustandes sicheren Auslegung des Fahrwerks angestrebt. Fahrkomfort und Fahrsicherheit stehen einander insofern gegensätzlich gegenüber, als eine komfortable Fahrwerksabstimmung in extremen Fahrsituationen keine ausreichende Fahrsicherheit bietet; eine harte und straffe Fahrwerksabstimmung hingegen hohen Anforderungen an den Fahrkomfort nicht gerecht wird. Angestrebt ist eine möglichst kleine dynamische Radlastschwankung bei geringer Aufbaubeschleunigung (unter Aufbau bzw. Fahrzeugaufbau ist im Zuge dieser Anmeldung unter anderem die Fahrgastzelle zu verstehen). Ein weicher Dämpfer führt zu einer geringen Aufbaubeschleunigung; jedoch zu großer dynamischer Radlastschwankung. Ein harter Dämpfer hingegen bewirkt eine große Aufbaubeschleunigung, d. h. weniger Fahrkomfort, vermindert jedoch die dynamische Radlastschwankung.

Für die Federung und Dämpfung zwischen Rad und Aufbau eines Fahrzeuges sind verschiedene Systeme bekannt. In der Regel ist allen Systemen eine Federanordnung gemeinsam, zu der eine Dämpfungseinrichtung parallel geschaltet ist. Bei passiven Systemen weist die Dämpfungseinrichtung einen Stoßdämpfer herkömmlicher Bauart auf, d.h. es kommt eine Kolben-Zylinder-Anordnung zum Einsatz, bei der ein Kolben unter Überwindung des Strömungswiderstands eines Mediums verlagerbar ist. Für das Medium steht ein konstanter Durchströmdurchlaß zur Verfügung. Bei den sogenannten semiaktiven Systemen liegt eine Anordnung entsprechender Bauart vor, wobei jedoch der Strömungsquerschnitt steuerbar ist, so daß sich die Dämpfungseigenschaften verändern lassen. Schließlich sind noch die aktiven Systeme bekannt, bei denen ein Kolben des Dämpfers bzw. Aktuators einen Zylinder in zwei Arbeitskammern unterteilt, in die ein Medium aktiv durch entsprechende Ansteuerung eingeleitet wird. Das aktive System erfordert somit Energie zum Druckaufbau für das Druckmedium. Trägt man die Dämpferkraft über der Geschwindigkeit des Dämpferkolbens in einem Koordinatensystem auf, so liegen die Kennlinien bei passiven und semiaktiven Systemen im ersten und dritten Quadranten, während bei aktiven Systemen auch Kennlinien im zweiten und vierten Quadranten realisierbar sind.

Bei dem eingangs genannten, bekannten Verfahren zur Dämpfung von Bewegungsabläufen wird an einem Kraftfahrzeug der jeweils vorliegende Bewegungszustand sensorisch ermittelt. Die Sensorsignale werden einer Signalverarbeitungsschaltung zugeführt, die ein Steuersignal für einen Aktuator, vorzugsweise einen semiaktiven Dämpfer, erzeugt. Dieser Dämpfer liegt parallel zu einer Federanordnung zwischen der Achse des Fahrzeuges und dem Fahrzeugaufbau. Insgesamt wird auf diese Art und Weise eine Fahrwerksregelung realisiert, die in Abhängigkeit von dem Bewegungszustand den Dämpfungsgrad des Dämpfers anpaßt. In unkritischen Fahrzuständen kann daher eine Komforteinstellung und in kritischen Fahrzuständen eine der Sicherheit dienende Einstellung vorgenommen werden.

Aus der DE-OS 37 38 048 ist eine Vorrichtung zur Dämpfung der Eigenbewegungen der Massen eines linearen Zweimassenschwingers, wie beispielsweise des Radfederungssystems eines Kraftfahrzeugs beschrieben. Die Massen, bei einem Kraftfahrzeug im allgemeinen also der Fahrzeugaufbau und die Räder, sind mit in Reihe geschalteten Feder-Dämpfer-Systemen verbunden. Neben der herkömmlichen Passivfederungs- bzw.Dämpfungssystemen, bei denen eine Bedämpfung der Relativbewegungen zwischen Fahrzeugaufbau und den Rädern im Vordergrund steht, ist der DE-OS 37 38 048 zu entnehmen, die Dämpfungskraft von verstellbar ausgelegten Dämpfern derart einzustellen, daß sie proportional zur Summe der separat gewichteten Absolutgeschwindigkeiten der beiden Massen ist.

Aufgabe der vorliegenden Erfindung ist es, in einfacher Weise zu einem Verfahren zur Dämpfung der Bewegungsabläufe zweier Massen zu gelangen, bei dem eine frequenzselektive Bedämpfung der Relativbewegungen der beiden Massen einerseits und eine Bedämpfung der Absolutbewegung der einen Masse andererseits ermöglicht wird.

Vorteile der Erfindung

Erfindungsgemäß werden zu einem Verfahren zur Dämpfung von Bewegungsabläufen zweier Massen, insbesondere an Fahrwerken von Personen- und Nutzkraftwagen, die Relativbewegungen der beiden Massen und Absolutbewegungen einer der beiden Massen durch die sensorische Erfassung entsprechender Signale ermittelt. Weiterhin wird dann abhängig von diesen Signalen ein Steuersignal für einen steuerbaren, an den Massen angreifenden Aktuator gebildet. Der Kern der Erfindung besteht nun darin, zur Bildung des Steuersignals die additive Überlagerung der Signale der Relativ- und Absolutbewegungen heranzuziehen, wobei wenigstens das Signal der Relativbewegungen frequenzselektiv gefiltert wird.

Das erfindungsgemäße System hat den Vorteil, daß sich die Dämpferkraft in eine frequenzabhängigen Anteil, der auf die Aufbaugeschwindigkeit zurückgeführt werden kann, und einer frequenzabhängigen Passivdämpfung, welche auf die Einfedergeschwindigkeit zurückgeführt werden kann, aufspaltet.

Das erfindungsgemäße Verfahren mit den im Hauptanspruch genannten Merkmalen hat den Vorteil, daß sich aufgrund der frequenzabhängigen Verarbeitung der Sensorsignale keine statische Kennlinie der Signalverarbeitungsschaltung ergibt, sondern daß sich diese Kennlinie mit der Frequenz verändert. Mithin erfolgt eine Aktuatorsteuerung bzw. -regelung in Abhängigkeit von dem Frequenzinhalt des Bewegungsablaufs. Bei einem Fahrzeug wird die eine Masse vorzugsweise von einem Rad und die andere Masse von dem Fahrzeugaufbau gebildet. Vorzugsweise wird dazu als Schaltungsanordnung mindestens ein Filter eingesetzt. Die das Filter passierenden Signale werden in ihrem Amplituden- und/oder Phasenverlauf beeinflußt. Durch dieser Einflußnahme erfolgt eine derartige Anpassung an den jeweiligen Bewegungszustand, daß bei kritischen Situationen eine der Fahrsicherheit dienende Fahrwerksabstimmung und in unkritischen Situationen eine komfortable Fahrwerkseinstellung vorgenommen wird.

Wird eine Einzelradregelung bei einem mit mehreren Rädern versehenen Fahrzeug realisiert, so ist zur Bestimmung der jedem Rad zugeordneten Fahrzeugaufbaumasse von dem in der Nähe der Radbefestigung des zugehörigen Rades befindlichen Aufbaumassenanteil auszugehen.

Von der möglichen Vielzahl der von Sensoren zu ermittelnden dynamischen Fahrzustandsgrößen ist es besonders vorteilhaft, die Aufbaubeschleunigung und Achsbeschleunigung der das Rad aufweisenden Achse oder die Aufbaubeschleunigung und den Einfederweg des Fahrzeugaufbaus relativ zur Achse oder die Aufbaubeschleunigung und die Einfedergeschwindigkeit oder die Achsbeschleunigung und den Einfederweg oder die Achsbeschleunigung und die Einfedergeschwindigkeit zu erfassen. Durch geeignete (elektronische) analog oder digital realisierte Aufbereitung der von den Sensoren gelieferten Signale mit bekannten Verfahren der Signalverarbeitung (Addition, Subtraktion, Integration, Differenziation) lassen sich für ein bevorzugtes Regelkonzept die notwendigen Signale bilden. Dieses sind die absolute Aufbaugeschwindigkeit und die relative Einfedergeschwindigkeit. Die Erfassung der absoluten Aufbaugeschwindigkeit hat den Vorteil, daß durch das erfindungsgemäße Verfahren ohne Komfortverlust eine Aufbaubewegungsberuhigung realisierbar ist, die bei konventionellen Fahrwerken nur durch eine harte, d. h. komfortmindernde Dämpfung erzielbar wäre.

Die absolute Aufbaugeschwindigkeit ist auf ein inertiales Koordinatensystem bezogen; unter der relativen Einfedergeschwindigkeit ist die Geschwindigkeit des Fahrzeugaufbaus relativ zum Rad zu verstehen.

Nach einer bevorzugten Ausführungsform der Erfindung sind zwei Filter vorgesehen, von denen dem einen die der Aufbaugeschwindigkeit und dem anderen die der Einfedergeschwindigkeit entsprechenden Signale zugeführt werden und deren Ausgangssignale zur Bildung des Steuersignals für den Aktuator herangezogen werden. Hierdurch läßt sich mittels des einen Filters eine frequenzabhängige " Skyhookdämpfung" und mit dem anderen Filter eine frequenzabhängige "Passivdämpfung" realisieren. Der Skyhookdämpfung wird die Aufbaugeschwindigkeit und der Passivdämpfung die Einfedergeschwindigkeit als Eingangsgrößen zugrunde gelegt. Skyhookdämpfung und Passivdämpfung werden in der Figurenbeschreibung im Detail erläutert.

Vorzugsweise werden die Übertragungsfunktionen der Filter durch die Gleichungen

$$ \frac{T}{T_1}(s) = \frac{\sum\limits_{i=0}^{m_1} b_{i_1} s^i}{\sum\limits_{i=0}^{m_1} a_{i_1} s^i} \quad , \quad \overline{F_2}(s) = \frac{\sum\limits_{i=0}^{m_2} b_{i_2} s^i}{\sum\limits_{i=0}^{m_2} a_{i_2} s^i} $$

beschrieben.

Grundsätzlich werden die Koeffizienten der Übertragungsfunktionen z. B. durch mathematische Optimierungsverfahren derart bestimmt, daß sich ein möglichst gutes Verhalten des Fahrzeuges bezüglich Fahrkomfort und Fahrsicherheit ergibt. Zusätzlich ist es überdies auch möglich, die Koeffizienten flexibel an die momentane Fahrsituation und/oder die Anforderungen des Fahrers anzupassen. Dieses erfolgt mittels den Fahrzustand erfassenden Sensoren und/oder durch Vorgabe. Die Filter können digital oder aber auch analog realisiert sein.

Von Vorteil ist es, wenn Filter unterschiedlicher Ordnungen eingesetzt werden. Für die Bearbeitung der Signale der Aufbaugeschwindigkeit ist bevorzugt ein Filter nullter Ordnung und für die Bearbeitung der der Einfedergeschwindigkeit zugeordneten Signale ein Filter zweiter Ordnung eingesetzt.

Neben der bereits erwähnten Möglichkeit, semiaktive Dämpfer einzusetzen, können auch Aktuatoren benutzt werden, die einem aktiven System entsprechen.

Die Erfindung betrifft ferner eine Vorrichtung zur Dämpfung von Bewegungsabläufen, insbesondere an Fahrwerken von Personen- und Nutzkraftwagen, mit den dynamischen Zustand des Bewegungsablaufes zweier Massen erfassenden Sensoren, deren Signale einer Signalverarbeitungsschaltung zugeführt werden, dessen Ausgang an einen steuerbaren, an den Massen angreifenden Aktuator angeschlossen ist, wobei die Signalverarbeitungsschaltung eine Schaltungsanordnung mit frequenzabhängigem Übertragungsverhalten aufweist.

Wie bereits erwähnt, wird die Schaltungsanordnung von zwei, den Amplituden- und/oder Phasenverlauf beeinflussenden Filtern gebildet, deren Ausgänge zur Bereitstellung eines Steuersignals für den Aktuator an eine Summierstelle angeschlossen sind.

Sofern die Vorrichtung für die Fahrwerkregelung an Fahrzeugen verwendet wird, ist die eine Masse von der Radmasse und die andere von dem dem Rad zuordbaren Massenanteil des Aufbaus des Fahrzeugs gebildet.

Eine bevorzugte Ausbildung besteht darin, daß dem Rad und dem Fahrzeugaufbau jeweils ein Sensor zugeordnet ist. Das Rad ist an einer Achse gelagert, die über eine Federanordnung mit dem Fahrzeugaufbau verbunden ist. Parallel zur Feder befindet sich der Aktuator (insbesondere Dämpfer). Sofern das Fahrzeug mehrere, vorzugsweise vier Räder aufweist, ist bevorzugt jedem Rad eine erfindungsgemäß ausgebildete Dämpfungsvorrichtung zugeordnet.

Zeichnung

Die Erfindung wird im folgenden anhand der Figuren näher erläutert. Es zeigen:
Figur 1 ein Fahrzeug, das mit einer nach dem erfindungsgemäßen Verfahren arbeitenden Fahrwerksregelung ausgestattet ist,
Figur 2 eine Modelldarstellung eines Radbereichs des Fahrzeugs im Hinblick auf seine Federungs- und Dämpfungsausbildung,
Figur 3 ein Blockschaltbild einer Signalverarbeitungsschaltung,
Figur 4 ein Diagramm des Amplitudenganges der Dämpfungsanordnung,
Figur 5 eine Modelldarstellung eines Radbereichs mit Skyhook-Komponente und
Figur 6 eine Darstellung einer Realisierung der Skyhook-Komponente.

Beschreibung des Ausführungsbeispiels

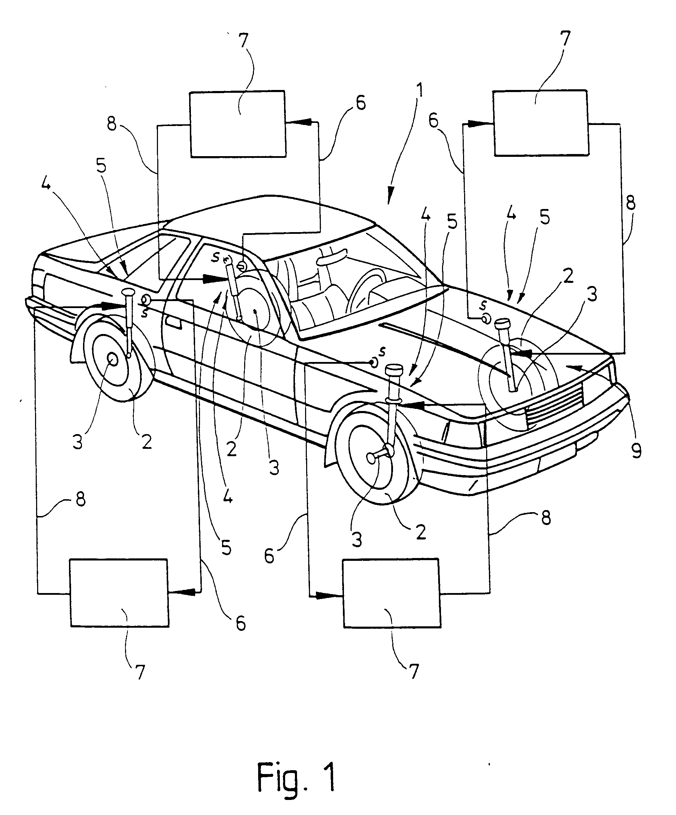

Die Figur 1 zeigt ein Kraftfahrzeug 1 mit Rädern 2, die auf Achsen 3 angeordnet sind. Jeder Achse 3 ist eine nicht näher dargestellte Federanordnung 4 und ein Dämpfer 5 zugeordnet. Ferner ist jeweils eine Sensoreinrichtung S schematisch dargestellt, die über eine Leitung 6 mit einer Signalverarbeitungsschaltung 7 verbunden ist, die an ihrem Ausgang 8 ein Steuersignal für einen jedem Rad zugeordneten Aktuator liefert. Der Aktuator ist als semiaktiver Dämpfer 5 ausgebildet, d. h. durch Variation des Strömungsquerschnitts läßt sich der Strömungswiderstand und somit das Dämpfungsverhalten verändern.

Die Figur 1 zeigt demgemäß eine Einzelradregelung, da jedem Rad 2 eine Reglereinheit eines vorzugsweise elektronisch realisierten Regelsystems mit den dazugehörigen Sensoren (Sensoreinrichtung S) und dem dazugehörigen Stellersystem (Dämpfer 5) zugeordnet ist. Die Signal- und Informationsverarbeitung der den einzelnen Rädern zugeordneten Reglereinheiten erfolgt -ungeachtet eventueller gemeinsamer elektronischer oder elektromechanischer Hardware-Komponenten- vorzugsweise voneinander unabhängig.

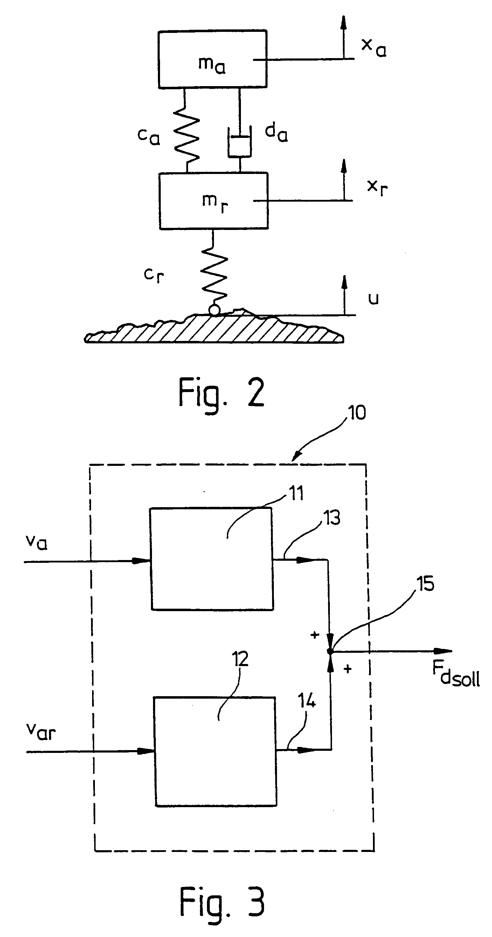

Aufgrund der vorausgesetzten Unabhängigkeit kann die Herleitung des Regelgesetzes im folgenden anhand eines Zwei-Massen-Modells für die Vertikaldynamik des Fahrzeugs 1 erfolgen. Das in der Figur 2 dargestellte Zwei-Massen-Modell zeigt schematisiert das Rad 2 sowie den Fahrzeugaufbau 9 in der Nähe der zugehörigen Radbefestigung. Das Modell faßt die einzelnen Fahrzeugkomponenten wie folgt schematisch zusammen:
- die ungefederten Fahrzeugmasse (Radfelge, bewegte Achs- und Radführungsteile) in der Radmasse $m_r$,
- die vertikale Nachgiebigkeit der elastischen Radelemente in Form der Federkonstanten $c_r$,

- die gefederten Fahrzeugmassen (Masse des in der Nähe der Radbefestigung befindlichen Aufbauanteils) in der Aufbaumasse $m_a$
- die Federung zur Schwingungsisolation des Fahrzeugaufbaus 9 und zur Aufnahme der statischen Aufbaulast in Form der Federkonstanten $c_a$ und
- den als aktiven oder semiaktiven realisierten, den Aktuator bildenden Dämpfer 5 mit seinem Dämpfungswert $d_a$.

Ferner sind in Bild 2 drei Koordinatensysteme dargestellt. Diese beziehen sich auf die Unebenheiten u der Fahrbahn, auf der die Räder 2 abrollen, den vertikalen Auslenkweg $x_r$ der Radmasse $m_r$ und die vertikalen Auslenkungen $x_a$ der Aufbaumasse $m_a$.

Jede Sensoreinrichtung S weist zwei Sensoren auf. Diese erfassen -alternativ entsprechend den aufgeführten Kombinationendie Aufbaubeschleunigung und die Achsbeschleunigung oder

die Aufbaubeschleunigung und den Einfederweg oder

die Aufbaubeschleunigung und die Einfedergeschwindigkeit oder

die Achsbeschleunigung und den Einfederweg oder

die Achsbeschleunigung und die Einfedergeschwindigkeit.

In der jeweiligen Signalverarbeitungsschaltung 7 wird durch elektronische Aufbereitung der von den jeweiligen Sensoren gelieferten Signale die absolute Aufbaugeschwindigkeit $v_a$ (in Bezug auf ein Inertialsystem) und die relative Einfedergeschwindigkeit $v_{ar}$ zwischen Fahrzeugaufbau 9 und Rad 2 ermittelt.

Die Signalverarbeitungsschaltung 7 weist gemäß Figur 3 eine Schaltungsanordnung 10 mit zwei Filtern 11 und 12 auf. Dem Filter 11 wird die Aufbaugeschwindigkeit $v_a$ und dem Filter 12 die Einfedergeschwindigkeit $v_{ar}$ als Eingangsgröße zugeführt. Die Ausgänge 13 und 14 der Filter 11 und 12 sind zur Bildung eines AktuatorSollkraftsignals $F_{dsoll}$ an eine Summierstelle 15 angeschlossen. Als Aktuatoren können aktive Kraftsteller, semiaktive Kraftsteller, kraftgeregelte Drosselsteller oder kraftgesteuerte Drosselsteller zum Einsatz gelangen.

Die beiden in der Figur 3 dargestellten Filter 11 und 12 werden durch ihren Amplitudengang und ihren Phasengang in Abhängigkeit von der Frequenz der an sie angelegten Signale beschrieben. Die Filter 11 und 12 können elektronisch digital, z. B. durch Verarbeitung einer die Filterübertragungseigenschaften repräsentierenden, zeitdiskreten Differenzengleichung durch ein Rechenprogramm eines elektronischen Steuergeräts oder elektronisch analog, z. B. durch Nachbildung einer die Filterübertragungseigenschaften repräsentierenden, zeitkontinuierlichen Differentialgleichung mit elektronischen Bauelementen realisiert sein.

Durch die Verwendung der. Filter 11 und 12 läßt sich das Aktuator-Sollkraftsignal $F_{dsoll}$ wie folgt mathematisch beschreiben:

$$F_{dsoll} = F_1 \{ v_a \} + F_2 \{ v_{ar} \}$$

Hierbei sind $F_1$ und $F_2$ die auf die angelegten Signale (absolute Aufbaugeschwindigkeit $v_a$; relative Einfedergeschwindigkeit $v_{ar}$) angewendeten Filteroperatoren. Die Filteroperatoren können im Frequenzbereich durch ihre komplexe Übertragungsfunktion

$$F_1(s) = \frac{\sum_{i=0}^{m_1} b_{i_1} s^i}{\sum_{i=0}^{n_1} a_{i_1} s^i} \; ; \; F_2(s) = \frac{\sum_{i=0}^{m_2} b_{i_2} s^i}{\sum_{i=0}^{n_2} a_{i_2} s^i}$$

beschrieben werden.

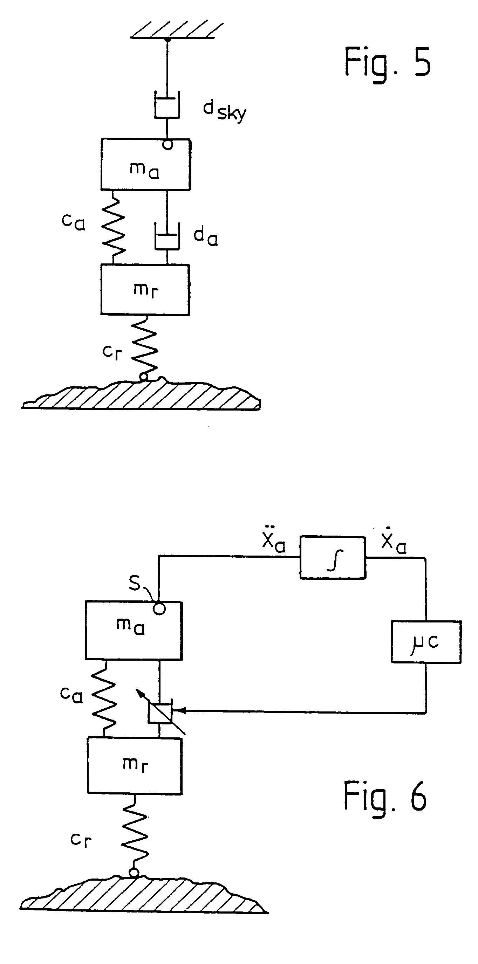

Schaltet man das Aktuator-Sollkraftsignal $F_{dsoll}$ auf einen näherungsweise idealen Aktuator, so gilt $F_d \approx F_{dsoll}$, wobei $F_d$ die Dämpferkraft ist. Mithin läßt sich die Dämpferkraft $F_d$ aufgrund des erfindungsgemäßen Verfahrens in eine frequenzabhängige Skyhookdämpfung $D_{sky}$ (f), die auf die Aufbaugeschwindigkeit $v_a$ zurück geführt werden kann, und eine frequenzabhängige Passivdämpfung, die $D_{passiv}$ (f), welche auf die Einfedergeschwindigkeit $v_{ar}$ zurückgeführt werden kann, aufspalten. Unter Skyhookdämpfung $D_{sky}$ ist ein an der Aufbaumasse $m_a$ angreifender, inertialer Dämpfer zu verstehen, der mit einem inertialen Fixpunkt (Himmel = sky) verbunden ist (vergl. Figur 5). In der Praxis ist ein derartiger inertialer Dämpfer nicht unmittelbar zu realisieren; er muß daher von dem Dämpfungswert $d_a$ mit umfaßt werden.

Die Figur 5 zeigt den Aufbau des beschriebenen Systems und in der Figur 6 wird die Realisierung gezeigt. Diese erfolgt dadurch, daß die Aufbaubeschleunigung $\ddot{x}_a$ des Fahrzeugaufbaus 9 mittels eines Sensor der Sensoreinrichtung S erfaßt und zur Bildung der Aufbaugeschwindigkeit $\dot{x}_a$ integriert und einem Mikroprozessor zugeführt wird, welcher den als semiaktiven Dämpfer 5 ausgebildeten Aktuator steuert. Hinzu tritt die bereits genannte frequenzabhängige Skyhookdämpfung $D_{sky}$ (f) und die frequenzabhängige Passivdämpfung $D_{passiv}$ (f).

Die Eigenschaften der verwendeten Filter 11 und 12 werden durch mathematische Optimierungsverfahren oder dergleichen derart bestimmt, daß sich ein möglichst gutes Verhalten des Kraftfahrzeugs 1 bezüglich Fahrkomfort und Fahrsicherheit ergibt.

Nach einer Weiterbildung der Erfindung ist es auch möglich, die Filterkoeffizienten und damit das Fahrzeugverhalten flexibel dem momentanen Fahrzustand oder auch den Anforderungen des Fahrers anzupassen.

Sowohl die Amplitudenverläufe als auch die Phasenverläufe der eingesetzten Filter 11 und 12 bestimmen das Verhalten der Fahrwerksregelung des Kraftfahrzeugs 1. Insbesondere sind die Ordnungen der verwendeten Filter 11 und 12 sowie -wie bereits beschrieben- die Filterkoeffizienten festzulegen.

Anhand eines Beispiels soll eine besonders einfache Auslegung verdeutlicht werden. Das im Skyhook-Zweig befindliche Filter 11 wird als konstantes Übertragungsglied (Filter nullter Ordnung) ausgebildet, was einer konstanten Skyhookdämpfung $D_{sky}$ entspricht. Hier liegt also keine Frequenzabhängigkeit vor. Das Filter 12 im Passiv-Zweig wird als Filter zweiter Ordnung mit der Übertragungsfunktion

$$G_2(s) = \frac{b_0 + b_1 s + b_2 s^2}{a_0 + a_1 s + s^2}$$

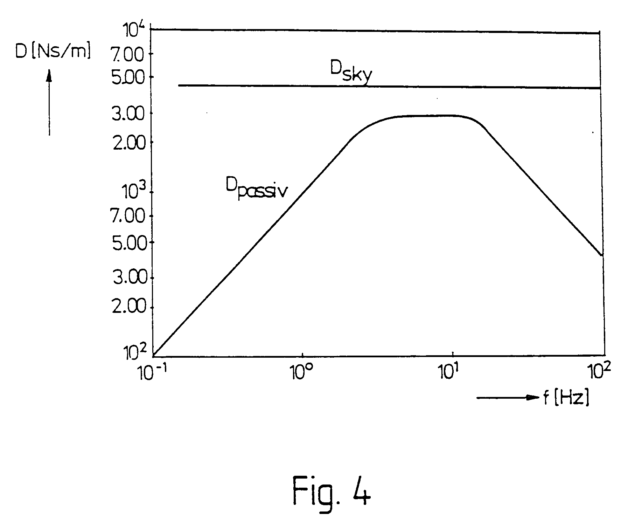

realisiert. Eine Optimierung der Filterkoeffizienten, die beispielsweise in Tabellen oder Kennfeldern abgespeichert sind oder aktuell im Mikroprozessor berechnet werden können, ergibt dann z. B. den in der Figur 4 gezeigten Verlauf der Skyhook- bzw. Passiv-Dämpfung in Abhängigkeit von der Frequenz f.

Bereits mit dieser einfachen Auslegung läßt sich ein Fahrzeugverhalten erzielen, das herkömmlichen, mit passiven Fahrwerkelementen ausgestatteten Fahrzeugen hinsichtlich Fahrkomfort und Fahrsicherheit deutlich überlegen ist, wobei der Komfortgewinn auf die den Fahrzeugaufbau inertial dämpfende Wirkung des Skyhook-Anteils und die niedrige Passivdämpfung im Komfortbereich (1 bis 8 Hz) zurückzuführen ist. Gleichzeitig ergibt sich eine sehr gute, herkömmlichen Fahrzeugen überlegene Fahrsicherheit, was auf den aus der Figur 4 ersichtlichen Anstieg der Passivdämpfung im Bereich der Radeigenfrequenz (ca. 8 bis 15 Hz) zurückzuführen ist.

**Patentansprüche**

1.   Verfahren zur Dämpfung von Bewegungsabläufen zweier Massen, insbesondere an Fahrwerken von Personen- und Nutzkraftwagen, wobei
     -   Relativbewegungen der beiden Massen und Absolutbewegungen einer der beiden Massen durch die sensorische Erfassung entsprechender Signale ermittelt werden, und
     -   abhängig von diesen Signalen ein Steuersignal für einen steuerbaren, an den Massen angreifenden Aktuator gebildet wird, wobei wenigstens eines der Signale frequenzselektiv gefiltert wird,
     dadurch gekennzeichnet, daß
     -   zur Bildung des Steuersignals ($F_{dsoll}$) die additive Überlagerung der Signale (Va, Var) der Relativ- und Absolutbewegungen herangezogen wird, wobei wenigstens das Signal (Var) der Relativbewegungen frequenzselektiv gefiltert wird.

2.   Verfahren nach Anspruch 1, dadurch gekennzeichnet, daß die frequenzselektive Filterung von mindestens einem den Amplituden- und/oder Phasenverlauf bestimmenden Filter (11, 12) gebildet wird.

3.   Verfahren nach einem der vorhergehenden Ansprüche, **dadurch gekennzeichnet**, daß die eine Masse von einem Rad (Radmasse $m_r$) und die andere Masse von einem Fahrzeugaufbau (Aufbaumasse $m_a$) eines Fahrzeugs gebildet ist.

4. Verfahren nach einem der vorhergehenden Ansprüche, **dadurch gekennzeichnet**, daß die Aufbaumasse ($m_a$) des Fahrzeugs von dem in der Nähe der Radbefestigung des zugehörigen Rades (2) befindlichen Aufbaumassenanteil gebildet ist.

5. Verfahren nach einem der vorhergehenden Ansprüche, **dadurch gekennzeichnet**, daß die Sensoren während des Fahrbetriebes die Aufbau- und Achsbeschleunigung der das Rad (2) aufweisenden Achse (3) oder die Aufbaubeschleunigung und den Einfederweg des Fahrzeugaufbaus (9) relativ zur Achse (3) oder die Aufbaubeschleunigung und die Einfedergeschwindigkeit oder die Achsbeschleunigung und den Einfederweg oder die Achsbeschleunigung und die Einfedergeschwindigkeit erfassen.

6. Verfahren nach einem der vorhergehenden Ansprüche, **dadurch gekennzeichnet**, daß aus den von den Sensoren gelieferten Signalen die absolute Aufbaugeschwindigkeit ($v_a$) und die relative Einfedergeschwindigkeit ($v_{ar}$) gebildet werden.

7. Verfahren nach einem der vorhergehenden Ansprüche, **gekennzeichnet durch** zwei Filter (11,12), von denen dem einen die der Aufbaugeschwindigkeit ($v_a$) und dem anderen die der Einfedergeschwindigkeit ($v_{ar}$) entsprechenden Signale zugeführt werden und deren Ausgangssignale zur Bildung des Steuersignals ($F_{dsoll}$) für den Aktuator (Dämpfer 5) summiert werden.

8. Verfahren nach einem der vorhergehenden Ansprüche, **dadurch gekennzeichnet**, daß die Übertragungsfunktionen der Filter (11,12) durch die Gleichungen

$$\overline{F_1}(s) = \frac{\sum_{i=0}^{m_1} b_{i_1} s^i}{\sum_{i=0}^{m_1} a_{i_1} s^i} \quad , \quad F_2(s) = \frac{\sum_{i=0}^{m_2} b_{i_2} s^i}{\sum_{i=0}^{n_2} a_{i_2} s^i}$$

beschrieben sind.

9. Verfahren nach einem der vorhergehenden Ansprüche, **dadurch gekennzeichnet**, daß die Koeffizienten der Übertragungsfunktionen dem momentanen Fahrzustand und/oder den Anforderungen des Fahrers angepaßt werden.

10. Verfahren nach einem der vorhergehenden Ansprüche, **dadurch gekennzeichnet**, daß Filter (11,12) unterschiedlicher Ordnungen eingesetzt werden.

11. Verfahren nach einem der vorhergehenden Ansprüche, **dadurch gekennzeichnet**, daß für die Bearbeitung der der Aufbaugeschwindigkeit ($v_a$) zugeordneten Signale ein Filter nullter Ordnung und für die Bearbeitung der der Einfedergeschwindigkeit ($v_{ar}$) zugeordneten Signale ein Filter zweiter Ordnung eingesetzt wird.

12. Verfahren nach einem der vorhergehenden Ansprüche, **dadurch gekennzeichnet**, daß als Aktuatoren aktive oder semiaktive Dämpfer (5) eingesetzt werden.

13. Vorrichtung zur Dämpfung von Bewegungsabläufen zweier Massen, insbesondere an Fahrwerken von Personen- und Nutzkraftwagen, wobei
   - Sensormittel vorgesehen sind, die die Relativbewegungen der beiden Massen und Absolutbewegungen einer der beiden Massen erfassen und entsprechende Signale ermitteln, und
   - Auswertemittel vorgesehen sind, die abhängig von diesen Signalen ein Steuersignal für einen steuerbaren, an den Massen angreifenden Aktuator bilden, wobei Filtermittel vorgesehen sind, mittels der wenigstens eines der Signale frequenzselektiv gefiltert wird,
   dadurch gekennzeichnet, daß
   - in den Auswertemitteln (7, 10) Additionsmittel (15) vorgesehen sind, mittels der die Signale (Va, Var) der Relativ- und Absolutbewegungen additiv überlagert werden, wobei mittels der Filtermittel (12) wenigstens das Signal (Var) der Relativbewegungen frequenzselektiv gefiltert wird.

**14.** Vorrichtung nach Anspruch 13, dadurch gekennzeichnet, daß in den Auswertemitteln (10) die frequenzselektive Filterung von mindestens einem den Amplituden- und/oder Phasenverlauf bestimmenden Filter (11, 12) gebildet wird.

**15.** Vorrichtung nach Anspruch 13 und/oder 14, **dadurch gekennzeichnet**, daß die Massen von der Radmasse ($m_r$) und dem dem Rad zugeordneten Aufbaumassenanteil (Aufbaumasse $m_a$) eines Fahrzeugs gebildet sind.

**16.** Vorrichtung nach einem der vorhergehenden Ansprüche 13 bis 15, **dadurch gekennzeichnet**, daß dem Rad (2) und dem Fahrzeugaufbau (9) jeweils ein Sensor zugeordnet ist.

**17.** Vorrichtung nach einem der vorhergehenden Ansprüche 13 bis 16, **dadurch gekennzeichnet**, daß dem Rad (2) eine Achse (3) zugeordnet ist, die über eine Federanordnung (4) mit dem Fahrzeugaufbau (9) verbunden ist.

**18.** Vorrichtung nach einem der vorhergehenden Ansprüche 13 bis 17, **dadurch gekennzeichnet**, daß das Fahrzeug (1) mehrere, vorzugsweise vier Räder (2) aufweist und daß jedem Rad (2) eine Dämpfungsvorrichtung zugeordnet ist.

**Claims**

**1.** Method of damping motion sequences of two masses, particularly in the running gear of passenger and utility vehicles, whereby
   - relative motions of the two masses and the absolute motion of one of the two masses are determined by sensors detecting the corresponding signals, and
   - in dependence on these signals a control signal is produced for a controllable actuator which engages the masses, whereby at least one of the signals is filtered in a frequency-selective manner.
   **characterised** in that
   - the additive superposition of signals ($v_a$, $V_{ar}$) of the relative and absolute motions is used to produce the control signal ($F_{dsoll}$), whereby at least the signal ($v_{ar}$) of the relative motions is filtered in a frequency-selective manner.

**2.** Method in accordance with Claim 1, **charcterised** in that the frequency-selective filtering is produced by at least one of the filters (11, 12) determining the amplitude and/or phase sequence.

**3.** Method in accordance with one of the preceding Claims **characterized** in that one mass is formed by a wheel (wheel mass $m_r$) and the other mass by the vehicle body (body mass $m_a$).

**4.** Method in accordance with one of the preceding Claims **characterized** in that the body mass ($m_a$) of the vehicle is constituted by the part of the body mass located in the vicinity of the attachment of the corresponding wheel (2).

**5.** Method in accordance with one of the preceding Claims **characterized** in that while the vehicle is being driven the sensors detect the body and axle acceleration of the axle (3) to which the wheel (2) appertains or the body acceleration and the spring displacement deflection of the vehicle body (9) relative to the axle (3) or the body acceleration and the rate of spring displacement or the axle acceleration and the spring displacement deflection or the axle acceleration and the rate of spring displacement.

**6.** Method in accordance with one of the preceding Claims **characterized** in that the absolute body velocity ($v_a$) and the relative rate of spring displacement ($v_{ar}$) are produced from the signals transmitted by the sensors.

**7.** Method in accordance with one of the preceding Claims **characterized** by two filters (11, 12) to one of which are transmitted the signals corresponding to the body velocity ($v_a$) and to the other the signals

8

corresponding to the rate of spring displacement ($v_{ar}$) and the output signals of which are summed-up to produce the control signal ($F_{dsoll}$) for the actuator (damper 5).

8. Method in accordance with one of the preceding Claims **characterized** in that the transfer functions of the filters (11, 12) are described by the equations

$$F_1(s) = \frac{\sum\limits_{i=0}^{m_1} b_{i_1} s^i}{\sum\limits_{i=0}^{n_1} a_{i_1} s^i} \quad , \quad F_2(s) = \frac{\sum\limits_{i=0}^{m_2} b_{i_2} s^i}{\sum\limits_{i=0}^{n_2} a_{i_2} s^2}$$

9. Method in accordance with one of the preceding Claims characterized in that the coefficients of the transfer functions are adjusted to the instantaneous driving condition and/or to the requirements of the driver.

10. Method in accordance with one of the preceding Claims **characterized** in that filters (11, 12) of different orders are used.

11. Method in accordance with one of the preceding Claims **characterized** in that a filter of zero order is used to process the signals appertaining to the body velocity ($v_a$) and a filter of the second order is used to process the signals appertaining to the rate of spring displacement ($v_{ar}$) .

12. Method in accordance with one of the preceding Claims **characterized** in that active or semiactive dampers (5) are used as actuators.

13. Device for the damping of motion sequences of two masses, particularly in the running gear of passenger and utility vehicles, whereby
   masses and the absolute motion of one of the two masses and determine the corresponding signals, and
   - evaluating means are provided which in dependence on these signals produce a control signal for a controllable actuator which engages the masses, whereby filtering means are provided by which at least one of the signals is filtered in a frequency-selective manner,
   **characterised** in that
   - adding means (15) are provided in the evaluating means (7, 10) by means of which the signals ($V_a$, $V_{ar}$) of the relative and absolute motions are superimposed additivly, whereby at least the signal ($v_{ar}$) of the relative motion is filtered in a frequency-selective manner.

14. Device in accordance with Claim 13, **characterised** in that in the evaluating means (10) the frequency-selective filtering is produced by at least one filter (11, 12) determining the amplitude and/or phase sequence.

15. Device in accordance with Claim 13 and/or 14 **characterized** in that the masses are constituted by the wheel mass ($m_r$) and the body mass component (body mass $m_a$) of a vehicle corresponding to the wheel.

16. Device in accordance with one of the preceding Claims 13 to 15, **characterized** in that the wheel (2) and the vehicle body (9) each have a sensor appertaining to it.

17. Device in accordance with one of the preceding Claims 13 to 16, **characterized** in that the wheel (2) has appertaining to it an axle (3) which is connected to the vehicle body (9) by a spring arrangement (4).

9

**18.** Device in accordance with one of the preceding Claims 13 to 17, **characterized** in that the vehicle (1) has several, preferably four wheels (2) and that a damping device appertains to each wheel (2).

## Revendications

**1.** Procédé pour amortir des fréquences de mouvements de deux masses, en particulier sur des châssis de voitures particulières et de véhicules utilitaires, dans lequel :
- des mouvements relatifs des deux masses et des mouvements absolus d'une des deux masses sont déterminés par la détection sensorielle de signaux correspondants, et
- en fonction de ces signaux est formé un signal de commande pour un actionneur dirigeable, agissant sur les masses, et au moins un des signaux étant filtré sélectivement en fréquence.

caractérisé en ce que :
- pour la formation du signal de commande ($F_{dcons}$) la superposition additive des signaux ($v_a$, $v_{ar}$) des mouvements relatifs et absolus est rapprochée, le signal ($v_{ar}$) des mouvements relatifs au moins étant filtré sélectivement en fréquence.

**2.** Procédé selon la revendication 1, caractérisé en ce que le filtrage sélectif en fréquence est constitué par au moins un filtre (11, 12) déterminant les caractéristiques d'amplitudes et/ou de phases.

**3.** Procédé selon l'une des revendications précédentes caractérisé en ce que l'une des masse est constituée par une roue (masse de roue $m_r$).

**4.** Procédé selon l'une des revendications précédentes, caractérisé en ce que la masse de carrosserie ($m_r$) du véhicule est constituée par la quote-part de la masse de carrosserie se trouvant au voisinage de la fixation de la roue (2) associée.

**5.** Procédé selon l'une des revendications précédentes, caractérisé en ce que les capteurs détectent pendant la marche, l'accélération de la carrosserie et de l'essieu (3) comportant la roue (2), ou l'accélération de la carrosserie et la course de compression du ressort de la carrosserie du véhicule (9) par rapport à l'essieu (3), ou l'accélération de la carrosserie et la vitesse de compression du ressort ou l'accélération de l'essieu et de course de compression du ressort, ou l'accélération de l'essieu et la vitesse de compression du ressort.

**6.** Procédé selon l'une des revendications précédentes, caractérisé en ce que, à partir des signaux délivrés par les capteurs, on établit la vitesse absolue de la carrosserie ($v_a$) et la vitesse relative de compression du ressort ($v_{ar}$).

**7.** Procédé selon l'une des revendications précédentes, caractérisé par deux filtres à l'un desquels sont amenés des signaux correspondant à la vitesse de la carrosserie ($v_a$) et à l'autre desquels sont amenés des signaux correspondant à la vitesse de compression du ressort ($v_{ar}$),leurs signaux de sortie étant sommés pour former le signal de commande ($F_{dcons}$) pour l'actionneur (amortisseur 5).

**8.** Procédé selon l'une des revendications précédentes, caractérisé en ce que les fonctions de transmission des filtres (11, 12) sont décrites par les équations :

$$F_1(s) = \frac{\displaystyle\sum_{i=o}^{m_1} bi_1\, s^i}{\displaystyle\sum_{i=o}^{n_1} ai_1\, s^i} \; , \quad F_2(s) = \frac{\displaystyle\sum_{i=o}^{m_2} bi_2\, s^i}{\displaystyle\sum_{i=o}^{n_2} ai_2\, s^i}$$

**9.** Procédé selon l'une des revendications précédentes, caractérisé en ce que les coefficients des fonctions de transmission sont adaptés à l'état momentané de marche et/ou aux exigences du conducteur.

**10.** Procédé selon l'une des revendications précédentes, caractérisé en ce que les filtres (11, 12) mis en oeuvre sont d'ordres différents.

**11.** Procédé selon l'une des revendications précédentes, caractérisé en ce que, pour le traitement des signaux associés à la vitesse de carrosserie ($v_a$) est utilisé un filtre d'ordre zéro, et pour le traitement des signaux associés à la vitesse de compression du ressort ($v_{ar}$), un filtre du deuxième ordre.

**12.** Procédé selon l'une des revendications précédentes, caractérisé en ce que comme actionneur sont utilisés des amortisseurs actifs ou semi-actifs.

**13.** Dispositif pour amortir des séquences de mouvements de deux masses, en particulier des châssis de voitures particulières ou de véhicules utilitaires, dans lequel sont prévus :
- des capteurs qui détectent les mouvements relatifs des deux masses et les mouvements absolus d'une des deux masses et émettent des signaux correspondants, et
- des moyens d'évaluation, qui forment en fonction de ces signaux un signal de commande pour un actionneur commandable agissant sur les masses, des moyens de filtrage étant prévus, au moyen desquels au moins l'un des signaux est filtré sélectivement en fréquence.

caractérisé en ce que,
- dans les moyens d'évaluation (7, 10) sont prévus des moyens additionnels (15 par lesquels les signaux ($v_a$, $v_{ar}$) des mouvements relatifs et absolus sont superposés de manière additive, et au moins le signal ($v_{ar}$) des mouvements relatifs est filtré sélectivement en fréquence à l'aide du moyen de filtrage (12).

**14.** Dispositif selon la revendication 13, caractérisé en ce que dans les moyens d'évaluation (10) le filtrage sélectif en fréquence est constitué par au moins un filtre (11, 12) déterminant les caractéristiques d'amplitudes et/ou de phases.

**15.** Dispositif selon les revendications 13 ou 14, caractérisé en ce que les masses sont constituées par la masse de la roue ($m_r$) et la quote-part de masse de la carrosserie associée à la roue (masse de carrosserie $m_a$) d'un véhicule.

**16.** Dispositif selon l'une des revendications précédentes 13 à 15, caractérisé en ce qu'un capteur est associé respectivement à la roue (2) et à la carrosserie du véhicule (5).

**17.** Dispositif selon l'une des revendications précédentes 13 à 16, caractérisé en ce qu'à la roue (2) est associé un essieu (3) qui est relié par un dispositif à ressort (4) à la carrosserie du véhicule (9).

**18.** Dispositif selon l'une des revendications précédentes 13 à 17, caractérisé en ce que le véhicule (1) comporte plusieurs roues (2), de préférence quatre, et en ce que à chaque roue (2) est associé un dispositif d'amortissement.

Fig. 1

Fig. 2

Fig. 3

Fig. 4

14

Fig. 5

Fig. 6